# EUROPÄISCHE PATENTSCHRIFT

(11) **EP 0 718 135 B1**
(45) Veröffentlichungstag und Bekanntmachung des Hinweises auf die Patenterteilung: **06.05.1998**
(21) Anmeldenummer: 95118413.4
(22) Anmeldetag: 23.11.1995
(51) Int. Cl.: B60J 7/22

(54) **Windabweisende Abdeckung für ein Cabriolet**
Wind deflector covering for convertible vehicle
Revêtement déflecteur de vent pour véhicules conversibles

(30) Priorität: 24.12.1994 DE 4446769
(43) Veröffentlichungstag der Anmeldung: 26.06.1996
(73) Patentinhaber: Wilhelm Karmann GmbH, D-49084 Osnabrück (DE); Bayerische Motoren Werke Aktiengesellschaft, 80788 München (DE)
(72) Erfinder: Hemmis, Ludger, D-49086 Osnabrück (DE); Heselhaus, Udo, D-49479 Ibbenbüren (DE)
(74) Vertreter: Busse & Busse Patentanwälte

(56) Entgegenhaltungen:
- DE-A- 4 119 530
- DE-C- 4 311 240
- DE-U- 8 813 139

## Beschreibung

Die Erfindung betrifft eine windabweisende Abdeckung für ein Cabriolet nach dem Oberbegriff des Anspruchs 1.

Bei bekannten Cabriolets mit einer windabweisenden Abdeckung (EP 0 487 860 A1) sind als Windschutz ein bei Nichtgebrauch auf einer Aufwickelrolle unterbringbares Rollo sowie ein über den Fondbereich des Fahrzeugs in eine Abdeckstellung mittels Riegelglieder festlegbare Abdeckung mit Rahmenteil vorgesehen. Derartige windabweisende Abdeckungen sind sowohl bei der Installation als auch bei der Handhabung aufwendig.

Der Erfindung liegt die Aufgabe zugrunde, eine windabweisende Abdeckung für ein Cabriolet zu schaffen, die mit geringem technischen Aufwand an unterschiedliche Einbauanforderungen anpaßbar ist und bei verbessertem Bedienkomfort insgesamt einen hinreichend sicheren Verschluß des Fondbereichs ermöglicht.

Ausgehend von einer windabweisenden Abdeckung nach dem Oberbegriff des Anspruchs 1 löst die Erfindung diese Aufgabe mit den Merkmalen des kennzeichnenden Teils des Anspruchs 1. Hinsichtlich wesentlicher weiterer Ausgestaltungen wird auf die Ansprüche 2 bis 19 verwiesen.

Die erfindungsgemäß ausgebildete windabweisende Abdeckung für ein Cabriolet weist mit der wahlweise von Hand oder automatisch bewegbaren Abdeckung eine Baugruppe auf, die einerseits mit geringem Bedienaufwand in eine eine optisch ansehnliche Verschlußkontur des gesamten Fondbereichs bildende Abdeckstellung überführbar und andererseits nach einer Rückführung in den Fahrzeuginnenraum beispielsweise im Bereich vor, hinter und/oder neben den Fondsitzen festlegbar ist. Die Abdeckung kann in vorteilhafter Ausbildung mit einer zu einem geringen Stauvolumen zusammenlegbaren Dachhaut versehen sein, so daß die Abdeckung mit geringem Aufwand raumsparend ablegbar ist. Ebenso ist denkbar, die Abdeckung aus miteinander verbundenen Stab- und/oder plattenteilen auszubilden, die in einer raumsparenden Packstellung festlegbar sind oder die Abdeckung bzw. deren pachteile über verlängerte Führungsbahnen so in den Fahrzeuginnenraum zu führen, daß eine Positionierung in Freiräumen des Karosseriebodens und/oder der -seitenwandungen erreichbar ist.

In vorteilhafter Ausführung ist die Abdeckung mit einem automatischen Antriebsorgan versehen, dessen Verbindungsglieder an der Abdeckung derart festgelegt sind, daß diese über ein elektrisches Bedienteil, beispielsweise im vorderen Bereich des Kraftfahrzeuges, wahlweise in die Schließ- oder Öffnungsstellung bewegt werden kann. In einer bevorzugten Ausbildung ist die Abdeckung jeweils randseitig in die Führungsbahnen bildenden Führungsgliedern beweglich abgestützt, mit denen die Abdeckung unmittelbar vor den Sitzbankbereich der Fondsitze geführt und hier in einer raumsparenden Packstellung so festlegbar ist, daß im Fondbereich insbesondere für Benutzer der Fondsitze hinreichende Beinfreiheit gewährleistet ist. Ebenso ist denkbar, über eine veränderte Kontur der Führungsteile die Abdeckung in einem anderen Fondbereich so abzusenken, daß eine sichere und von außen weitgehend unsichtbare Festlegung erreicht ist.

Hinsichtlich wesentlicher weiterer Vorteile und Einzelheiten der Erfindung wird auf die nachfolgende Beschreibung und die Zeichnung verwiesen, in der ein Ausführungsbeispiel einer erfindungsgemäßen abweisenden Abdeckung veranschaulicht ist. In der Zeichnung zeigen:
- Fig. 1: eine perspektivische Darstellung eines Fondbereich eines Cabriolets mit einer Abdeckung in Schließstellung,
- Fig. 2: eine das Prinzip der Abdeckung verdeutlichende Seitenansicht gemäß einer Linie II-II in Fig. 1,
- Fig. 3: eine Einzeldarstellung der in Schließstellung befindlichen Abdeckung gemäß Fig. 1 und
- Fig. 4: eine vergrößerte Einzeldarstellung eines Spriegels mit einer randseitiger Verbindungsplatte.

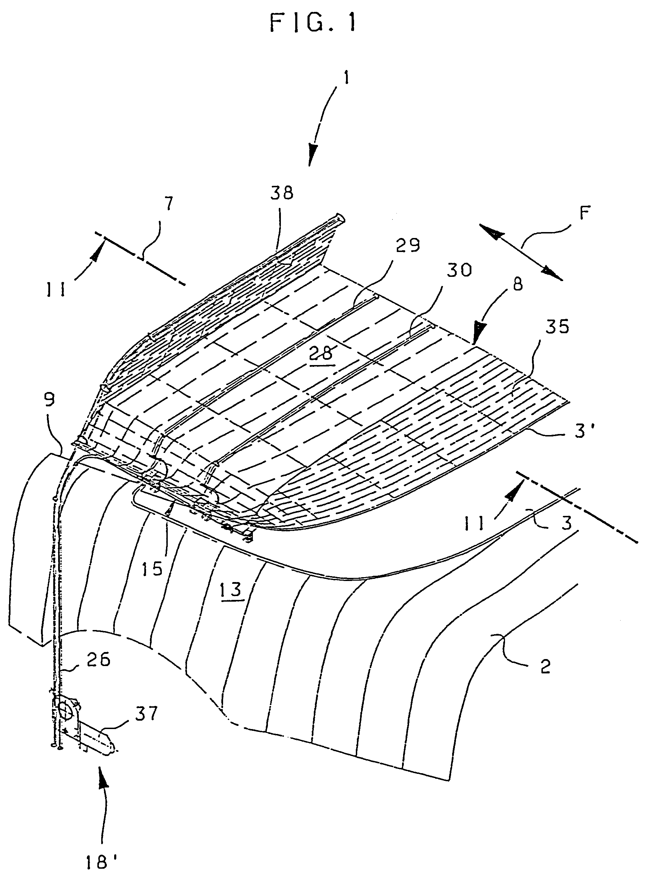

In Fig. 1 ist eine insgesamt mit 1 bezeichnete Windschutzvorrichtung für ein lediglich in seiner Heckkontur 2 dargestelltes Cabriolet veranschaulicht, wobei sich die Windschutzvorrichtung 1 in einer Schließstellung befindet, die mit einer ein Cabriolet-Faltverdeck (nicht dargestellt) verdeckenden Verdeckklappe 3 im gemeinsamen Randbereich 3' weitgehend konform verläuft.

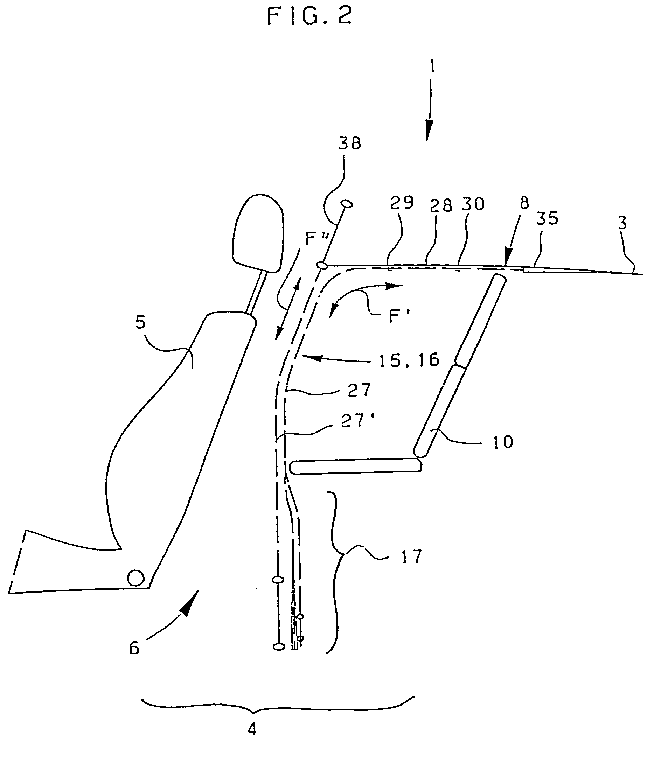

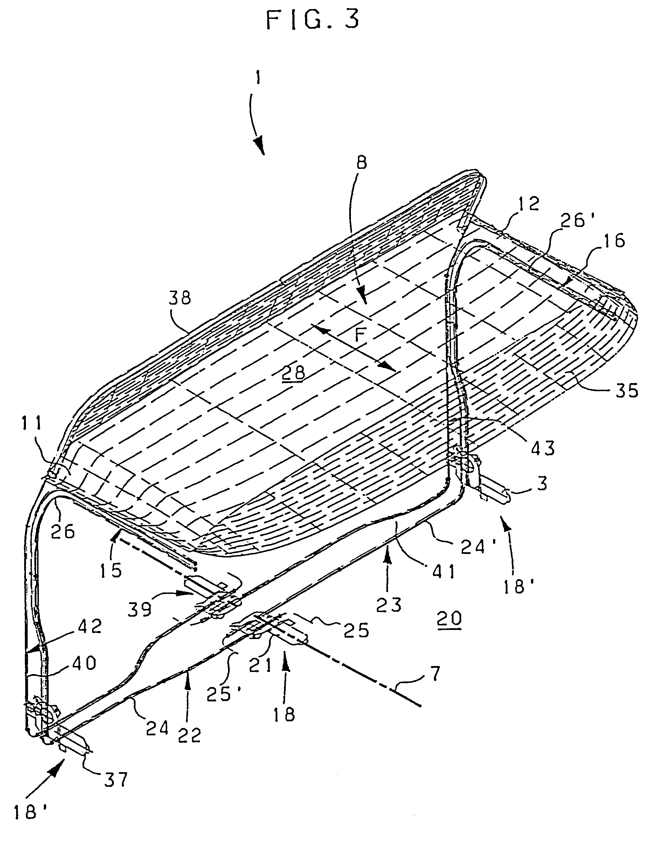

Die Windschutzvorrichtung 1 ist dabei mit einer den Fondbereich 4 (Fig. 2) hinter jeweiligen Vordersitzen 5 abschirmenden und in eine Nichtgebrauchsstellung (nicht dargestellt) in den Fahrzeuginnenraum 6 überführbaren Abdeckung 8 versehen, die in eine im wesentlichen waagerechte und im Bereich der Brüstungslinie 9 des Cabriolet-Fahrzeuges eine Abdeckebene definierende Schließstellung über den Fondsitzen 10 überführt ist (Fig. 1 und Fig. 3). Für eine leichtgängige und materialschonende Bewegung der Abdeckung 8 weist diese im Bereich ihrer beiden Längsränder 11,12 jeweils eine am seitlichen Karosseriebereich 13 bzw. 14 verlaufende Führungsbahn 15,16 auf, die sich ausgehend vom Bereich der Brüstungslinie 9 konturgleich bis in den unteren Bereich des Fahrzeuginnenraums 6 bzw. des Fondbereichs 4 erstrecken.

Über diese Führungsbahnen 15,16 kann die Abdeckung 8 unter Einwirkung einer geringen Zug- bzw. Druckkraft in einer ersten Bewegungsphase in Richtung der Fahrzeuglängsachse 7 (Pfeil F) verschoben und danach der Führungsbahn folgend nach unten geschwenkt (Pfeil F', Fig. 2) werden, wobei die Abdeckung 8 aus der dargestellten Schließstellung (Fig. 1, Fig. 3) unter gleichzeitiger Stabilisierung im Bereich der Führungsbahnen 15,16 so bewegt werden kann, daß in deren bodenseitigen Endbereichen die Abdeckung 8 in einer quer zur Fahrzeuglängsachse 7 vor den Fondsitzen 10 befindlichen ersten Absenkstellung in einem Staubereich 17 (Fig. 2) in einer Packstellung ablegbar ist. Ebenso ist denkbar, die Abdeckung 8 so auszubilden, daß die Kontur der jeweiligen Führungsbahnen eine Verschiebung in eine hinter den Fondsitzen 10 befindliche zweite Absenkstellung (nicht dargestellt) ermöglicht oder die Abdeckung 8 aus der Schließstellung (Fig. 1, Fig. 3) zu den seitlichen Karosseriebereichen 13,14 hingeführt und hier in eine Packstellung verbracht wird.

Die vorbeschriebenen Öffnungs- und Schließbewegungen der Abdeckung 8 können mittels der insgesamt leichtgängig zusammenwirkenden Bauteile im Bereich der Führungsbahnen 15, 16 von Hand ausgeführt werden. In zweckmäßiger Ausführung ist die Abdeckung 8 jedoch mit zumindest einem automatischen Antriebsorgan 18 verbunden, so daß über eine beispielsweise im Bereich des Armaturenbretts oder der Mittelkonsole des Cabriolets angeordnete Schalteinheit (nicht dargestellt) eine bequeme Bedienung möglich ist.

In einer ersten Ausführungsform gemäß Fig. 3 ist das Antriebsorgan 18 von einem mittig im Bereich der Fahrzeuglängsachse 7 am Fahrzeugboden 20 abgestützten Stellmotor 21 gebildet, wobei dieser über zwei Verbindungsglieder 22,23 jeweils längsrandseitig an der Abdeckung 8 angreift.

Die Verbindungsglieder 22,23 sind dabei in einer zweckmäßigen Ausführung als zwei gegenläufig mittels des Stellmotors 21 bewegbare und in einem jeweiligen Hüllrohre 24, 24' geführte Spindelfedern 25,25' ausgebildet, die jeweils über die als ein Aufnahmerohr 26,26' ausgebildeten Führungsbahnen 15,16 mit der Abdeckung 8 so verbunden sind, daß mit geringem Raumbedarf und geringen Reibungsverlusten eine gleichmäßige Krafteinleitung auf die Abdeckung 8 möglich und dieses auch bei häufig wiederholtem Öffnungs- und Schließvorgang zuverlässig geführt ist.

Die Prinzipdarstellung gemäß Fig. 2 verdeutlicht dabei mit einer ersten Strichpunktlinie 27 eine zweckmäßige Ausbildung der Bewegungskurve der Abdeckung 8, die auf dieser Bewegungskurve 27 unter Wirkung der Zugbewegung des Stellmotors 18 über die Spindelfedern 25 und die Aufnahmerohre 26, 26' bis in den Bereich unterhalb der Fondsitze 10 bewegt wird und dabei durch bogenförmige Bereiche ohne spitzwinklige Richtungsänderungen im Verlauf der Bewegungskurve keine das Material bzw. die Einzelteile der Abdeckung 8 überbelastende Deformationen erfährt.

Die in Fig. 1 und Fig. 3 dargestellte Abdeckung 8 ist in einer bevorzugten Ausführung zumindest bereichsweise als ein faltbarer, vorzugsweise eine Verdeckplane mit zwei Verdeckspriegeln 29,30 aufweisender Dachkörper 28 ausgebildet. Ebenso ist denkbar, den Dachkörper 28 aus einzelnen, miteinander verbundenen Faltkörpern oder dgl. Plattenteilen (nicht dargestellt) zu bilden, mit denen der Aufwand bei der Herstellung der Abdeckung 8 zwar erhöht, aber gleichzeitig in der Schließstellung ein verbesserter, diebstahlsicherer Verschluß des Fondsbereichs 4 erreicht und damit ein zusätzlicher Gepäckraum gebildet werden kann.

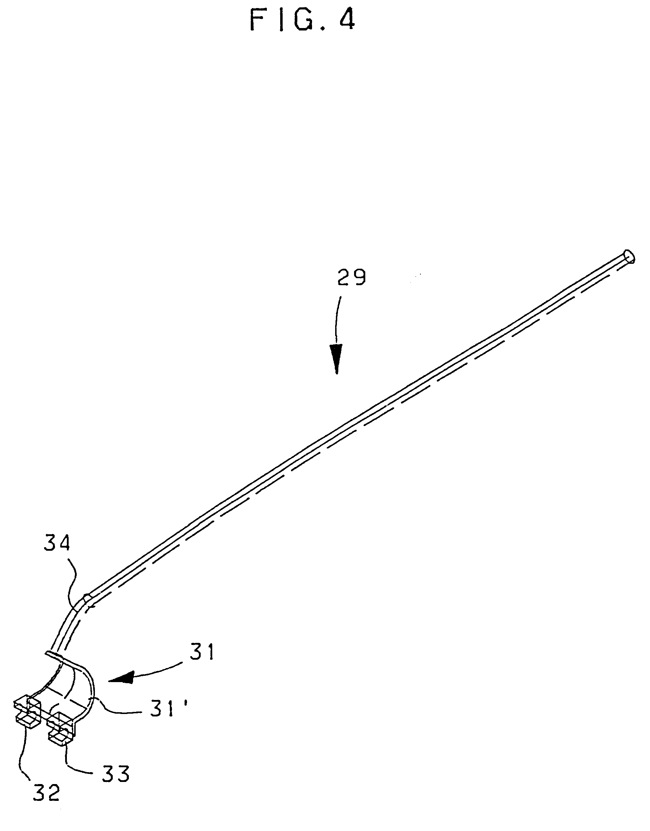

Der Dachkörper 28 ist randseitig zum Bereich der Führungsbahnen 15,16 hin über die Verdeckspriegel 29,30 gespannt und diese weisen ihrerseits randseitig eine Mitnahmeplatte 31 (Fig. 4) auf. Zum Bereich der Führungsbahnen 15 bzw. 16 weist die Mitnahmeplatte 31 randseitig zwei Gleitnocken 32,33 auf, die einerseits in bzw. an den Führungsbahnen 15,16 geführt und gleichzeitig die Mitnahmeverbindung mit den jeweiligen Spindelfedern 25,25' ermöglichen. Für eine optisch ansehnliche Profilierungswirkung der Verdeckspriegel 29,30 unterhalb der Dachhaut 28 sind die Verdeckspriegel 29,30 jeweils mit einem bogenförmigen Endbereich 34 versehen, der an der eine konvexe Profilform 31' aufweisenden Mitnahmeplatte 31 abgestützt ist.

In einer weiteren zweckmäßigen Ausbildung ist die Abdeckung 8 zumindest in ihrem in der Ausschwenkrichtung jeweils vorderen Bereich des Dachkörpers 28 mit einer in Schließstellung einen konturgleichen Übergang in die obere Karosserieform 3' bildenden Aussteifungsplatte 35 versehen, mit der in Öffnungs- bzw. Packstellung (nicht dargestellt) die gefaltete Dachhaut 28 im Innenraum 6 des Cabriolets gleichzeitig in einer Schutzabdeckstellung festlegbar ist.

Für eine formschlüssige Verbindung des Karosserierandbereiches 2 mit der Abdeckung 8 kann diese randseitig mit einem oder mehreren Arretierungsgliedern (nicht dargestellt) versehen sein, die selbsttätig in der Schließstellung einrasten und mit einer automatischen Entriegelung versehen sind.

In der Darstellung gemäß Fig. 3 ist zusätzlich zu dem Antriebsorgan 18 eine alternative Ausführungsform dargestellt, wobei anstelle des mittleren Stellmotors 21 (oder zusätzlich zu diesem) jeweils seitlich an den Endbereichen der Führungsbahnen 15,16 an der Karosserie abgestützte Stellmotoren 37,38 vorgesehen sind. In der Darstellung gemäß Fig. 1 ist lediglich einer der Stellmotoren 37 dargestellt.

In einer Erweiterung der vorbeschriebenen Ausführungsformen der Windschutzvorrichtung 1 kann diese mit einem an sich bekannten Windschott 38 verbunden sein. Diese in Fig. 1 und 3 dargestellte Ausführungsform weist einen separaten Stellmotor 39 (Fig. 3) auf, der über jeweilige Spindelfedern 40,41 entlang vertikaler Führungsglieder 42,43 mit dem Windschott 38 so verbunden ist, daß dieses automatisch in die Gebrauchs- bzw. Nichtgebrauchsstellung entlang einer vertikalen Bewegungsbahn 27' (Fig. 2) bewegbar ist.

Mit den vorbeschriebenen Stellmotoren 18;37,38;39 ergeben sich unterschiedliche Bedien- und Ausstattungsvarianten, um einerseits die Abdeckung 8 und andererseits das Windschott 38 bedarfsgerecht zu bewegen. Dabei ist eine gemeinsame Bewegung der Abdeckung 8 und des Windschotts 38 über einen einzelnen oder mehrere der Stellmotoren ebenso denkbar wie eine Steuerung der Motoren derart, daß die beiden Windschutzteile 8 und 38 gleichzeitig oder nacheinander von der Bedienperson in die optimale Windschutz- und/oder Schließstellung überführt werden können.

## Patentansprüche

1. Windabweisende Abdeckung für ein Cabriolet, die den Fondbereich (4) hinter den Vordersitzen (5) in Gebrauchsstellung gegen Zugluft abschirmt und in Nichtgebrauchsstellung in einer den Fondbereich (4) freigebende Stellung verbringbar ist, **dadurch gekennzeichnet**, daß die Abdeckung (8) entlang zweier seitlicher, gekrümmt verlaufender Führungsbahnen (15,16) aus der im wesentlichen horizontalen Gebrauchsstellung in eine im Fondbereich (4) hinter den Vordersitzen (5) befindliche Nichtgebrauchsstellung überführbar und dort in einer Packstellung ablegbar ist.

2. Windabweisende Abdeckung nach Anspruch 1, dadurch gekennzeichnet, daß die Abdeckung (8) in der Nichtgebrauchsstellung quer zur Fahrzeuglängsachse (7) vor jeweiligen Fondsitzen (10) festlegbar ist.

3. Windabweisende Abdeckung nach Anspruch 1, dadurch gekennzeichnet, daß die Abdeckung (8) in der Nichtgebrauchsstellung quer zur Fahrzeuglängsachse (7) hinter den Fondsitzen (10) festlegbar ist.

4. Windabweisende Abdeckung nach Anspruch 1, dadurch gekennzeichnet, daß die Abdeckung (8) in der Nichtgebrauchsstellung im wesentlichen parallel zur Fahrzeuglängsachse (7) seitlich neben den Fondsitzen (10) festlegbar ist.

5. Windabweisende Abdeckung nach einem der Ansprüche 1 bis 4, dadurch gekennzeichnet, daß die Abdeckung (8) in Gebrauchsstellung eine im wesentlichen waagerechte und im Bereich der Brüstungslinie (9) befindliche Abdeckebene über den Fondsitzen (10) definiert.

6. Windabweisende Abdeckung nach einem der Ansprüche 1 bis 5, dadurch gekennzeichnet, daß die Abdeckung (8) beidseits in konturgleichen Führungsbahnen (15,16) beweglich ist.

7. Windabweisende Abdeckung nach einem der Ansprüche 1 bis 6, dadurch gekennzeichnet, daß die Abdeckung (8) mit zumindest einem automatischen Antriebsorgan (18;37,38;39) verbunden ist.

8. Windabweisende Abdeckung nach einem der Ansprüche 1 bis 7, dadurch gekennzeichnet, daß das Antriebsorgan (18) von einem mittig im Bereich der Fahrzeuglängsachse (7) am Fahrzeugboden (20) abgestützten Stellmotor (21) gebildet ist und dieser über zumindest ein Verbindungsglied (22,23) an der Abdeckung (8) angreift.

9. Windabweisende Abdeckung nach Anspruch 8, dadurch gekennzeichnet, daß als Verbindungsglieder (22,23) zwei gegenläufig vom Stellmotor (21) bewegbare, in einem Hüllrohr (24,24') geführte und jeweils längsrandseitig mit der Abdeckung (8) verbundene Spindelfedern (25,25') vorgesehen sind.

10. Windabweisende Abdeckung nach Anspruch 8 oder 9, dadurch gekennzeichnet, daß die Spindelfedern (25,25') jeweils über ein in der Kontur der Führungsbahnen (15,16) verlaufendes Aufnahmerohr (26,26') mit der Abdeckung (8) verbunden sind.

11. Windabweisende Abdeckung nach einem der Ansprüche 1 bis 10, dadurch gekennzeichnet, daß die Abdeckung (8) zumindest bereichsweise mit einem faltbaren Dachkörper (28) versehen ist.

12. Windabweisende Abdeckung nach Anspruch 11, dadurch gekennzeichnet, daß der als eine Verdeckplane ausgebildete Dachkörper (28) von zumindest einem Verdeckspriegel (29, 30) untergriffen ist, an dem randseitig eine in die jeweiligen Aufnahmerohre (26,26') eingreifende Mitnahmeplatte (31) vorgesehen ist.

13. Windabweisende Abdeckung nach Anspruch 12, dadurch gekennzeichnet, daß die Mitnahmeplatte (31) in ihrem zum Führungsteil (15,16) gerichteten Randbereich zumindest einen Gleitnocken (32,33) aufweist.

14. Windabweisende Abdeckung nach Anspruch 12 oder 13, dadurch gekennzeichnet, daß die Mitnahmeplatte (31) zum Fahrzeuginnenraum (6) hin eine konvexe Profilform (31') aufweist und der Verdeckspriegel (29,30) jeweils mit einem bogenförmigen Endbereich (34) an der Mitnahmeplatte (31) abgestützt ist.

15. Windabweisende Abdeckung nach einem der Ansprüche 1 bis 14, dadurch gekennzeichnet, daß die Abdeckung (8) zumindest in ihrem in Ausschwenkrichtung jeweils vorderen Bereich des Dachkörpers (29) mit einer in Schließstellung einen konturgleichen Übergang in die obere Karosserieform (2) bildenden Aussteifungsplatte (35) versehen ist.

16. Windabweisende Abdeckung nach einem der Ansprüche 1 bis 15, dadurch gekennzeichnet, daß die Abdeckung (8) randseitig mit im oberen Karosserierand (2,13) einrastbaren Arretierungsgliedern versehen ist.

17. Windabweisende Abdeckung nach einem der Ansprüche 1 bis 16, dadurch gekennzeichnet, daß als Antriebsorgan (18') zwei jeweils im Bereich der seitlichen Karosseriewandungen angeordnete Stellmotoren (37,37') vorgesehen sind.

18. Windabweisende Abdeckung nach einem der Ansprüche 1 bis 17, dadurch gekennzeichnet, daß im Bereich des Fahrzeugbodens (20) ein mit einem vertikalen Windschott (38) verbundener Stellmotor (39) vorgesehen ist.

19. Windabweisende Abdeckung nach einem der Ansprüche 1 bis 18, dadurch gekennzeichnet, daß die Abdeckung (8) und der Windschott (38) mit dem einen (21;39) und/oder den zwei Stellmotoren (37,37') verbunden und über diese wahlweise gleichzeitig oder nacheinander bewegbar sind.

## Claims

1. A wind-deflecting covering for a convertible vehicle and which, when in the position of use, shields the rear area (4) behind the front seats (5) against draughts and which can, when not in use, be moved into a position which exposes the rear area (4), characterised in that the covering (8) can be moved along two laterally curvilinearly extending guide paths (15, 16) out of the substantially horizontal position of use into a position of non-use disposed in the rear area (4) behind the front seats (5) and where it can be laid in a packed position.

2. A wind-deflecting covering according to claim 1, characterised in that, in the position of non-use, the covering (8) can be fixed crosswise to the longitudinal axis (7) of the vehicle and in front of respective rear seats (10).

3. A wind-deflecting covering according to claim 1, characterised in that in the position of non-use the covering (8) can be fixed crosswise to the longitudinal axis ( 7) through the vehicle behind the rear seats (10).

4. A wind-deflecting covering according to claim 1, characterised in that in the position of non-use the covering (8) can be fixed substantially parallel with the longitudinal axis (7) through the vehicle and laterally alongside the rear seats (10)

5. A wind-deflecting covering according to one of claims 1 to 4, characterised in that in the position of use the covering (8) defines a substantially horizontal covering plane disposed over the rear seats (10) and in the region of the edge line (9).

6. A wind-deflecting covering according to one of claims 1 to 5, characterised in that the covering (8) is movable on both sides in like-contoured guide paths (15, 16).

7. A wind-deflecting covering according to one of claims 1 to 6, characterised in that the covering (8) is connected to at least one automatic drive member (18; 37, 38; 39).

8. A wind-deflecting covering according to one of claims 1 to 7, characterised in that the drive member (18) is a positioning motor (21) supported on the vehicle floor (20) centrally in the area of the longitudinal axis (7) through the vehicle, the said positioning motor (21) engaging the covering (8) via at least one connecting link (22, 23).

9. A wind-deflecting covering according to claim 8, characterised in that the connecting links (22, 23) provided are two spindle springs (25, 25') respectively connected to the longitudinal sides of the covering (8) and which are guided in a sleeve (24, 24') and which are adapted to be moved in opposite directions by the positioning motor (21).

10. A wind-deflecting covering according to claim 8 or 9, characterised in that the spindle springs (25, 25') are each connected to the covering (8) via a receiving tube (26, 26') extending in the contour of the guide paths (15, 16).

11. A wind-deflecting covering according to one of claims 1 to 10, characterised in that at least areas of the covering (8) have a foldable roof member (28).

12. A wind-deflecting covering according to claim 11, characterised in that the roof member (28) which is constructed as a roof hood has engaging beneath it at least one hood support (29, 30), each edge of which is provided with a drive plate (31) engaging the respective receiving tube (26, 26').

13. A wind-deflecting covering according to claim 12, characterised in that the drive plate (31) has at least one sliding block (32, 33) in its marginal portion which is towards the guide part (15, 16).

14. A wind-deflecting covering according to claim 12 or 13, characterised in that the drive plate (31) has, towards the interior (6) of the vehicle, a concave profiled shape (31'), while the hood support (29,30) comprises an arcuate end portion (34) supported on the drive plate (31).

15. A wind-deflecting covering according to one of claims 1 to 14, characterised in that the covering (8), at least in that area of the roof member (29) which is in front in the outwards-pivoted direction, is provided with a reinforcing plate (35) which in the closed position forms a like-contoured transition into the upper body work shape (2).

16. A wind-deflecting covering according to one of claims 1 to 15, characterised in that the edges of the covering (8) are provided with locking members adapted to be snap-fitted into the upper edge (2, 13) of the body work.

17. A wind-deflecting covering according to one of claims 1 to 16, characterised in that the drive members (18') provided are two positioning motors (37, 37') respectively disposed in the region of the side walls of the body work.

18. A wind-deflecting covering according to one of claims 1 to 17, characterised in that in the region of the vehicle floor (20) there is a positioning motor (39) connected to a vertical wind guard (38).

19. A wind-deflecting covering according to one of claims 1 to 18, characterised in that the covering (8) and the wind guard (38) are connected to one (21; 39) and/or both positioning motors (37, 37') via which they can be moved simultaneously or one after the other as desired.

## Revendications

1. Revêtement déflecteur de vent pour un cabriolet, qui protège la zone de fond (4) derrière les sièges avant (5) dans la position d'usage contre un courant d'air et peut passer dans une position de non usage en une position libérant la zone de fond (4),
caractérisé en ce que
le revêtement (8) peut être transformé le long de deux glissières de guidage (15, 16) latérales, se développant de manière coudée d'une position d'usage essentiellement horizontale dans une position de non utilisation se trouvant dans la zone de fond (4) derrière les sièges avant (5) et là il peut être déposé dans une position de pliage.

2. Revêtement déflecteur de vent selon la revendication 1,
caractérisé en ce que
le revêtement. (8), en position de non utilisation, peut être fixé transversalement à l'axe longitudinal du véhicule (7) en avant des sièges arrières respectifs (10).

3. Revêtement déflecteur de vent selon la revendication 1,
caractérisé en ce que
le revêtement (8) peut être fixé en position de non utilisation transversalement à l'axe longitudinal du véhicule (7) derrière les sièges arrière (10).

4. Revêtement déflecteur de vent selon la revendication 1,
caractérisé en ce que
le revêtement (8), dans la position de non utilisation, peut être fixé essentiellement parallèlement à l'axe longitudinal du véhicule (7) latéralement à côté des sièges arrière (10).

5. Revêtement déflecteur de vent selon une des revendications 1 à 4,
caractérisé en ce que
le revêtement (8), en position d'utilisation, définit un plan de recouvrement essentiellement horizontal se trouvant dans la zone de la ligne de rambarde (9) au-dessus des sièges arrière (10).

6. Revêtement déflecteur de vent selon une des revendications 1 à 5,
caractérisé en ce que
le revêtement (8) est mobile des deux côtés dans des glissières de guidage (15, 16) de contours égaux.

7. Revêtement déflecteur de vent selon une des revendications 1 à 6,
caractérisé en ce que
le revêtement (8) est relié avec au moins un organe de commande automatique (18 ; 37 ; 38 ; 39).

8. Revêtement déflecteur de vent selon une des revendications 1 à 7,
caractérisé en ce que
l'organe de commande (18) est formé d'un moteur de positionnement (21) appuyé au centre dans la zone de l'axe longitudinal du véhicule (7) sur le fond du véhicule (20) et ce moteur agit sur le revêtement (8) par au moins un élément de liaison (22, 23).

9. Revêtement déflecteur de vent selon la revendication 8,
caractérisé en ce que
comme éléments de liaison (22, 23), sont prévus deux ressorts à fuseau (25, 25') rendus mobiles en sens contraire par le moteur de positionnement (21), guidés dans un tube de gainage (24, 24') et reliés respectivement du côté du bord longitudinal au revêtement (8).

10. Revêtement déflecteur de vent selon la revendication 8 ou 9,
caractérisé en ce que
les ressorts à fuseau (25, 25') sont reliés au revêtement (8) respectivement par un tube de réception (26, 26') se développant dans le contour des glissières de guidage (15, 16).

11. Revêtement déflecteur de vent selon une des revendications 1 à 10,
caractérisé en ce que
le revêtement (8) est muni au moins par zone d'une pièce de toit (28) pliable.

12. Revêtement déflecteur de vent selon la revendication 11,
caractérisé en ce que
la pièce de toit (28) réalisée comme une bâche de capote est soutenue par au moins un arceau de capote (29, 30), sur lequel est prévue, du côté du bord, une plaque d'entraînement (31) faisant prise sur le tube de réception respectif (26, 26').

13. Revêtement déflecteur de vent selon la revendication 12,
caractérisé en ce que
la plaque d'entraînement (31) comporte dans sa zone de bord dirigée vers la pièce de guidage (15, 16) au moins un ergot de glissement (32, 33).

14. Revêtement déflecteur de vent selon la revendication 12 ou 13,
caractérisé en ce que
la plaque d'entraînement (31) comporte en direction de l'intérieur du véhicule (6) une forme de profil convexe (31') et l'arceau de capote (29, 30) est appuyé respectivement par une zone d'extrémité en forme d'arc (34) sur la plaque d'entraînement (31).

15. Revêtement déflecteur de vent selon une des revendications 1 à 14,
caractérisé en ce que
le revêtement (8) est muni au moins dans sa zone antérieure de la pièce de toit (29) respectivement dans le sens du pivotement d'une plaque de raidissement (35) formant dans la position de fermeture une transition de même contour que la forme supérieure de la carrosserie (2).

16. Revêtement déflecteur de vent selon une des revendications 1 à 15,
caractérisé en ce que
le revêtement (8) est muni du côté du bord d'éléments d'arrêt s'enclenchant dans le bord supérieur de la carrosserie (2, 13).

17. Revêtement déflecteur de vent selon une des revendications 1 à 16,
caractérisé en ce que
comme organe de commande (18'), sont prévus deux moteurs de positionnement (37, 37') disposés respectivement dans la zone des parois latérales de la carrosserie.

18. Revêtement déflecteur de vent selon une des revendications 1 à 17,
caractérisé en ce que
dans la zone du fond du véhicule (20), est prévu un moteur de positionnement (39) relié à une cloison étanche au vent verticale (38).

19. Revêtement déflecteur de vent selon une des revendications 1 à 18,
caractérisé en ce que
le revêtement (8) et la cloison étanche au vent (38) sont reliés à l'un des moteurs (21 ; 39) et/ou aux deux moteurs de positionnement (37, 37') et sont rendus mobiles par ceux-ci facultativement en même temps ou l'un après l'autre.
